# EUROPÄISCHE PATENTSCHRIFT

(11) **EP 3 499 089 B1**
(45) Veröffentlichungstag und Bekanntmachung des Hinweises auf die Patenterteilung: **08.03.2023**
(21) Anmeldenummer: 17207232.4
(22) Anmeldetag: 14.12.2017
(51) Int. Cl.: F16H 25/22

(54) **KUGELUMLENKUNG EINES KUGELGEWINDETRIEBES**
BALL DEFLECTION OF A BALL DRIVE MECHANISM
RENVOI DE BILLES D'UNE VIS D'ENTRAÎNEMENT À BILLES

(43) Veröffentlichungstag der Anmeldung: 19.06.2019
(73) Patentinhaber: SFS Group International AG, 9435 Heerbrugg (CH)
(72) Erfinder: Schädlich, André, 9469 Haag (CH); Frei, Stefan, 9443 Widnau (CH); Sinz, Daniel, 6921 Kennelbach (AT); Zach, Marijo, 9443 Widnau (CH)

(56) Entgegenhaltungen:
- EP-A1- 3 203 117
- EP-A2- 1 375 966
- WO-A1-2014/184154
- WO-A1-2016/190145
- DE-U1-202011 001 752
- JP-A- 2015 081 636
- JP-A- 2016 017 544
- JP-U- H0 687 762
- US-A1- 2012 192 668

## Beschreibung

Die vorliegende Erfindung befasst sich mit einem Kugelgewindetrieb, insbesondere einer stark vereinfachten Kugelumlenkung für einen Kugelgewindetrieb.

### TECHNISCHER HINTERGRUND

Als Kugelumlaufspindel oder auch Kugelgewindetrieb (KGT) wird üblicherweise ein Wälzschraubtrieb bezeichnet mit Kugeln als Wälzkörper. Technisch gesehen funktioniert ein KGT als Schraubgetriebe, dessen Unter- bzw. Übersetzung durch die Dimensionierung der Gewindespindel, genauer durch die Steigung des Gewindes bestimmt wird.

Kugelgewindetriebe werden in vielen technischen Anwendungen eingesetzt, vor allem im Maschinenbau und dort bevorzugt in Werkzeugmaschinen. Zunehmend kommen KGT aber auch als Längsantriebe in Bereichen zum Einsatz, wo bisher meist Hydrauliksysteme Verwendung fanden, z.B. in Pressen, Spritzgiessmaschinen und Servolenkungen. Zudem spielen KGT auch eine zunehmende Rolle in elektromechanischen und elektro-hydraulischen Bremssystemen, wo KGT als Ersatz für hydraulische Bremszylinder oder parallel zu bekannten Bremssystemen als Betätigungselement eines Bremsassistenzsystemen eingesetzt werden.

### STAND DER TECHNIK

Ein KGT gemäss Stand der Technik ist WO 2014/184154 gezeigt und in Figur 1 abgebildet. Zu den Hauptbestandteilen des KGT 10 zählen eine Gewindespindel 12 und eine diese Spindel umgreifende Spindelmutter 14. Zwischen diesen beiden Bauteilen laufen im Betrieb Kugeln um, wobei die Gewindezüge der Gewindespindel 12 wie auch der Spindelmutter 14 komplementär ausgebildet und so aufeinander abgestimmt sind, dass sie als Kugelführungen wirken.

Die Spindelmutter 14 besteht aus einem Mutterkörper, der eine Öffnung 17 für eine Kugelumlenkung 15, 16 aufweist. Diese Kugelumlenkung 15, 16 hat die Aufgabe, die Kugeln an einer ersten Stelle aus der Kugelführung zwischen Spindelmutter 14 und Gewindespindel 12 herauszuheben und an einer zweiten Stelle zurückzuführen. Die Kugelrückführung stellt also einen Bypass dar, der mehrere Gewindezüge des Mutter-Spindelsystems überbrückt. Dadurch entsteht ein geschlossener Umlaufpfad für die Kugeln des KGT 10.

Die Kugelumlenkung 15, 16 gemäss dem referenzierten Stand der Technik ist im Wesentlichen zweiteilig ausgeführt. Der erste Teil 16 weist eine im wesentlichen U-Form auf und ist im Querschnitt zumindest abschnittsweise halbrohrförmig ausgeführt. Der zweite Teil 15 ergänzt den ersten Teil 16 derart, dass zumindest an den Enden der Umlenkeinrichtung eine rohrförmige Kontur gebildet wird.

Der Montagevorgang für die Kugelumlenkung dieses KGT Typs verläuft so, dass in die Öffnung 17 der Spindelmutter 14 der erste Teil 16 der Kugelumlenkung eingefügt wird, danach wird der zweite Teil 15 ergänzt, so dass der zweite Teil radial weiter aussen liegend angeordnet ist als der erste Teil. Durch Überschieben einer Hülse 18 werden der erste (16) und zweite (15) Teil der Kugelumlenkung gesichert.

Die Kugelumlenkung ist bei einem KGT ein sehr aufwändiges Bauteil, sowohl was den Herstell- wie den Montageaufwand angeht. Nachteil des gezeigten Standes der Technik ist demnach die Ausführung mit zwei Teilen plus einer Sicherungshülse. Die Hülse muss eine definierte Kraft auf die Kugelumlenkung 15,16 ausüben, die nicht zu gering sein darf, weil durch eine ungenügende Halterung die sichere Kugelführung nicht gewährleistet ist. Umgekehrt kann eine zu starke Haltekraft den Kugelrücklaufkanal deformieren und die Funktion des KGT als Ganzes beeinträchtigen. Zudem muss bei der Montage das Überschieben der Hülse so kontrolliert erfolgen, dass die Bauteile 15 und 16 nicht verschoben oder beschädigt werden.

Das Dokument WO 2016/190 145 zeigt eine Kugelumlenkung für einen Kugelgewindetrieb. Die Kugelumlenkung ist einteilig ausgeführt und wird zur Montage in einer Öffnung der Spindelmutter mittig geknickt. In der Öffnung wird die Umlenkung durch Nasen gehalten, die in eine umlaufende Rille eingreifen. Nach dem ordnungsgemässen Platzieren der Kugelumlenkung wird der mittige Knick durch Verschmelzen zweier Bauteile versteift.

Aufgabe der vorliegenden Erfindung ist daher, den Stand der Technik mit dem Ziel der Vereinfachung der Konstruktion bei gleichzeitig höherer Montagesicherheit zu verbessern.

### BESCHREIBUNG DER ERFINDUNG

Die vorliegende Erfindung löst dieses Problem durch einen Ersatz der Hülse 18 und eine Vereinfachung der Konstruktion der Kugelumlaufbauteile gemäß Anspruch 1.

Allen nachfolgenden Ausführungsvarianten gemeinsam ist der Aufbau des Kugelumlaufkanals 28 durch zwei Hauptbestandteile, die im Folgenden als Oberschale 26 und Unterschale 25 bezeichnet werden. Eine Spindelmutter 14 wie in der vorliegenden Erfindung durchgängig angesprochen, weist, wie im Stand der Technik bekannt, ein Innengewinde auf, das - zusammen mit dem komplementär ausgeführten Kugelgewinde einer Gewindespindel 12 - die Kugeln in den Kugelumlaufrillen zwischen Spindel und Mutter führen. Um die Funktion eines KGT zu erfüllen, muss ein Kugelumlenkkanal 28 geschaffen werden, der den Kugeln eines KGT zwischen zwei definierten Gewindepositionen der Spindelmutter eine Rückführung ermöglicht. Dabei können nur eine oder mehrere Windungen überbrückt werden. Auch ist eine Schrägführung des Kugelumlenkkanals möglich und oft erwünscht, so dass die Kugeln nach dem Ausheben aus dem Gewinde nicht um 90° umgelenkt werden müssen, sondern in einem spitzen Winkel zum Gewinde rückgeführt werden können. KGT können eine oder mehrere Kugelumlenkkanäle aufweisen. Um Platz für den Kugelumlaufkanal zu schaffen ist es üblich und bekannt, im Mutternkörper 19 der Spindelmutter 14 eine oder mehrere Öffnungen vorzusehen. Bei der vorliegenden Erfindung wird pro Kugelumlenkung eine langlochähnliche Öffnung verwendet, an deren Längsenden jeweils der Mutternkörper 19 radial nach innen aufgebrochen ist und so die Kugelumlaufrille 20 der Spindelmutter zwei Öffnungen aufweist. Zwischen diesen beiden Durchbrüchen ist die Öffnung 17 im Mutternkörper 19 als Graben ausgebildet, der zumindest so tief ausgearbeitet wird, dass die Kugeln und die Bauteile des Kugelumlenkkanals 28 hierfür Platz finden.

Anders formuliert umfasst ein Kugelgewindetrieb also eine Gewindespindel 12 und eine Spindelmutter 14, die die Gewindespindel 12 koaxial zumindest teilweise umschliesst. Eine Vielzahl von Kugeln läuft im Zwischenraum zwischen Gewindespindel 12 und Spindelmutter 14 um. Eine Öffnung 17 in der Mantelfläche der Spindelmutter 14 nimmt eine Kugelumlenkung auf, die zumindest zweiteilig ausgeführt ist und eine Oberschale 26 und eine Unterschale 25 umfasst. Die Unterschale 26 ist dabei radial innen näher zur Spindelmutterlängsachse angeordnet als die Oberschale 25. Die Unterschale weist eine im Wesentlichen halbschalige Kontur auf. Mit halbschalig ist hierbei im Grundsatz die Ausführung als "der Länge nach geteiltes Rohr" gemeint, wobei die Teilung nicht hälftig sein muss. Je nach Auslegung des KGT kann eine eher flache Ausführung der Unterschale ausreichend bzw. bevorzugt sein, ähnlich einer Rinne. Wesentlich bei der vorliegenden Erfindung ist, dass Oberschale 26 und Unterschale 25 ohne weitere, diskrete mechanische Befestigungsmittel in der Spindelmutter 14 befestigt werden. Bevorzugt wird die in der Spindelmutter 14 montierte Anordnung aus Unterschale 26 und Oberschale 25 nicht über die durch die Spindelmutter vorgegebene Aussenkontur hinausragen. Ohne weitere, diskrete mechanische Befestigungsmittel meint hierbei, dass keine Schrauben, zusätzliche Klemm- und Hilfsmittel wie Hülsen, Bügel etc. erforderlich sind, um die Kugelumlenkung funktionell fertigzustellen. Die Verbindung von Oberschale 26 und Spindelmutter 14 wird stattdessen durch eine Verriegelung, einen Clip-Mechanismus, erfolgen. Dazu wird ein Federelement 30 an der Oberschale 26 vorgesehen, das im montierten Zustand in eine Nut 32 in der Seitenwand der Öffnung 17 in der Spindelmutter 14 eingreift und die Oberschale 26 in einer definierten Position in der Öffnung 17 sichert. Die Nut bzw. alternativ Längsrille, Wandöffnung oder Hinterschneidung kann bei der Fertigung der Öffnung 17 mit eingebracht werden.

Bevorzugt wird die Unterschale 25 als Formteil, als Tiefziehteil, Stanz- oder Prägeteil bzw. als Spritzgussteil ausgeführt. Die bevorzugte Materialwahl ist Stahlblech, es könnten aber auch hochfeste Kunststoffe zum Einsatz kommen. Die Unterschale wird, je nach Auslegung des KGT, an den Enden Elemente aufweisen, die im verbauten Zustand in den Kugelumlauf zwischen Mutter und Spindel ragen und das Ausheben bzw. Rückführen der Kugeln ermöglichen. Dies können zungenähnliche oder löffelartige Endabschnitte sein, die eine reibungsarme Umlenkung der Kugel erleichtern.

Die Verbindung von Unterschale 25 und Spindelmutter 14 könnte als Verschweissung, Verstemmung, Klemmung, Punktschweissung oder Laserschweissung erfolgen (nicht beanspruchte Ausführungsvariante).

Die Ausführung der Oberschale kann unterschiedlich erfolgen, sowohl was die technische Ausführung wie auch die Materialwahl angeht. In einer ersten Ausführungsform für die Oberschale 26 wird diese als Formteil, als Tiefziehteil, Stanz- oder Prägeteil bzw. als Spritzgussteil aus Metall oder Kunststoff ausgeführt. Analog zur Unterschale könnte die Verbindung von Oberschale 26 und Spindelmutter 14 bevorzugt als Verschweissung, Verstemmung, Klemmung, Punktschweissung oder Laserschweissung erfolgen (nicht beanspruchte Ausführungsvariante). Damit wird das Merkmal "ohne weitere, diskrete mechanische Befestigungsmittel befestigt" erfüllt.

Alternativ zu Verschweissung oder Clip-Verbindung könnte die Öffnung 17 Seitenwände aufweisen, welche zur Aussenfläche der Spindelmutter 14 hin konisch nach innen geneigt sind, so dass der Boden der Öffnung eine grössere lichte Weite aufweist als der Rand der Öffnung 17 an der Oberfläche der Spindelmutter. Durch eine komplementäre Ausbildung der Oberschale könnte somit eine Klemmwirkung erzielt werden, die ebenfalls ohne weitere mechanische Befestigungsmittel auskommt (nicht beanspruchte Ausführungsvariante).

Eine weitere Vereinfachung, die die Erfindung vorschlägt, besteht darin, den Kugelumlenkkanal nicht so auszulegen, dass Oberschale und Unterschale ein geschlossenes Rohr bzw. einen geschlossenen Tunnel bilden. Im Sinne von Materialersparnis und Aufwandsreduzierung können Oberschale und Unterschale so ausgelegt werden, dass sie lediglich einen konturierten Dach und Boden bilden und die Seitenwände der Öffnung 17 direkt als Führungshilfen für die Kugeln dienen. Somit wird im montierten Zustand der Kugelumlenkkanal 28 zumindest abschnittsweise durch die Oberschale 26, die Unterschale 25 und die Seitenwände der Öffnung 17 gebildet.

Alternativ zur Ausführung aus Blech bzw. Metall kann die Oberschale 26 als Kunststoffteil ausgeführt werden. In einer Ausführungsform der Erfindung kann dieses Kunststoffteil so ausgelegt werden, dass es funktionell und strukturell einem Blechteil weitgehend nachempfunden ist. Jedoch kann in einer (nicht beanspruchten) Weiterbildung der Erfindung die Oberschale auch so ausgebildet bzw. erweitert werden, dass sie die Spindelmutter umschliesst und somit die endgültige Oberfläche der Spindelmutter bildet. Dabei kann "umschliessen" sowohl ein teilweises wie vollständiges Umgeben der Spindelmutter bedeuten. Diese erweiterte Oberschale 40 wäre einstückig, das heisst im montierten Zustand bilden das Oberteil der Kugelumlenkung und die Umschliessung der Spindelmutter eine untrennbare Einheit. Auch bei dieser Ausführung überragt die Kugelumlenkung die finale Aussenkontur des Mutternkörpers nicht, daher ist dieses Merkmal gewahrt.

Realisieren liesse sich diese Ausführungsform so, dass ein Einlegeteil, das der Oberschale 26 wie oben beschrieben, nahekommt, in der Öffnung 17 platziert wird. Es schliesst den Kugelumlenkkanal 28 und/oder die Öffnung 17 nach aussen ab. Durch ein anschliessendes Umspritzen der Spindelmutter 14 wird die einstückige, erweiterte Oberschale (40) integral ausgeformt. Das Einlegeteil würde bevorzugt so ausgelegt, dass eine möglichst innige, sichere Verbindung mit dem Kunststoff beim Umspritzen erzielt werden kann.

Alternativ könnte die erweiterte Oberschale als separates Bauteil einstückig gefertigt werden, und weisst hierbei auch die funktionellen Elemente auf, die von der Oberschale der Kugelumlenkung zu erbringen sind. Durch Überschieben auf eine Spindelmutter 14 mit den vormontierten Elementen der Unterschale würde der Kugelumlauf komplettiert. Die Fixierung in einer Sollposition kann z.B. dadurch erreicht werden, dass die funktionellen Elemente in die Öffnung 17 einrasten und so einen festen Sitz der weiterten Oberschale 40 sicherstellen.

Prozessseitig betrachtet, sind die (nicht beanspruchten) Verfahrensschritte bei der Montage eines KGT bis und mit der Unterschale:
- Bereitstellen einer Spindelmutter 14
- Einlegen einer Unterschale 25 in eine Öffnung 17 der Spindelmutter in einer Sollposition. Je nach Ausführung des KGT wird dies variieren; die Vorgabe, dass später die Kugelumlenkung nicht über die durch die Spindelmutter vorgegebene Aussenkontur überragen darf, findet ebenfalls Anwendung.
- Je nach Ausführungsvariante, Befestigen der Unterschale 25 an der Spindelmutter 14 durch Verschweissen, Verstemmen, Klemmen, Punktschweissen oder Laserschweissen.

Danach wird eine Oberschale 26 in der Öffnung 17 in einer Sollposition angeordnet. Wenn die Oberschale 26 als Blechformteil oder als entsprechendes Kunststoffteil ausgeformt ist, kann deren Befestigung an der Spindelmutter 14 durch Verschweissen, Verstemmen, Klemmen, Punktschweissen oder Laserschweissen erfolgen ohne weitere diskrete, mechanische Befestigungsmittel.

Alternativ kann eine erweiterte Oberschale 40 aus Kunststoff bereitgestellt werden, die durch einfaches Aufschieben auf die Spindelmutter 14 montiert wird. Die Aussenkontur der Spindelmutter wird so durch die Oberschale bzw. erweiterte Oberschale definiert.

Alternativ zu den beschriebenen Befestigungsarten kann eine Oberschale 26 ein als Federelement 30 ausgelegtes Funktionselement aufweisen und in der Öffnung 17 der Spindelmutter 14 an korrespondierender Sollposition eine Nut 32 (Längsrille, Hinterschneidung, Wandöffnung) vorgesehen sein. Diese Oberschale kann in die Öffnung 17 in der Spindelmutter 14 eingeschoben werden, bis das Federelement 30 in die Nut 32 verriegelnd eingreift und die Oberschale 26 so in einer definierten Position gehalten wird.

Wiederum als dritte Befestigungsalternative kann die Oberschale 26 aus Kunststoff elastisch verformbar ausgebildet sein und so in die konische Öffnung 17 in der Spindelmutter 14 eingeschoben werden, dass in der Soll-Endposition ein Klemmsitz erzielt wird. Durch vorübergehendes Zusammendrücken kann die Oberschale temporär die an der Oberfläche engere Öffnung passieren und so montiert werden.

In der oben beschriebenen Ausführungsform eines KGT als umspritztes Bauteil wird die Oberschale 26 aus Kunststoff bzw. das Einlegeteil ein Halbzeug sein und der teilmontierte Kugelgewindetrieb in ein Werkzeug einer Kunststoff-Spritzgiessmaschine eingelegt. Das Werkzeug umschliesst die Spindelmutter 14 mindestens teilweise. Danach wird die Spindelmutter umspritzt, wodurch die Oberschale 26 integraler Bestandteil einer erweiterten Oberschale 40 wird.

### KURZBEZEICHNUNG DER FIGUREN

Figur 1 zeigt einen Kugelgewindetrieb nach Stand der Technik.
Figur 2 zeigt eine Spindelmutter 14 in schräger Draufsicht mit einer Querschnittebene Q und einer Schrägschnittebene S.
Figur 3 zeigt eine Spindelmutter 14 im Schrägschnitt entlang einer Schnittebene S, gemäss einer Ausführung der Erfindung.
Figur 4 zeigt die Spindelmutter 14 in Schrägansicht gemäss einer Ausführung der Erfindung.
Figur 5 zeigt die Spindelmutter 14 mit einem Kugelumlenkanal in verstemmter Bauweise im Querschnitt
Figur 6 zeigt einen Querschnitt entlang einer Schnittebene Q am Ende eines Kugelumlenckanals mit einer Verankerung in Click-Bauweise
Figur 7 zeigt ein Detail X aus Figur 6
Figur 8 zeigt die Fixierung einer Oberschale in einer Öffnung mit konisch zulaufenden Wänden.
Figur 9 zeigt, entlang einer Schnittebene S eine Spindelmutter 14 in umspritzter Bauweise mit erweiterter Oberschale 40

### BESCHREIBUNG DER FIGUREN

Die Erfindung wird nun mit Bezug auf die begleitenden Zeichnungen anhand Ausführungsformen beispielhaft erläutert.

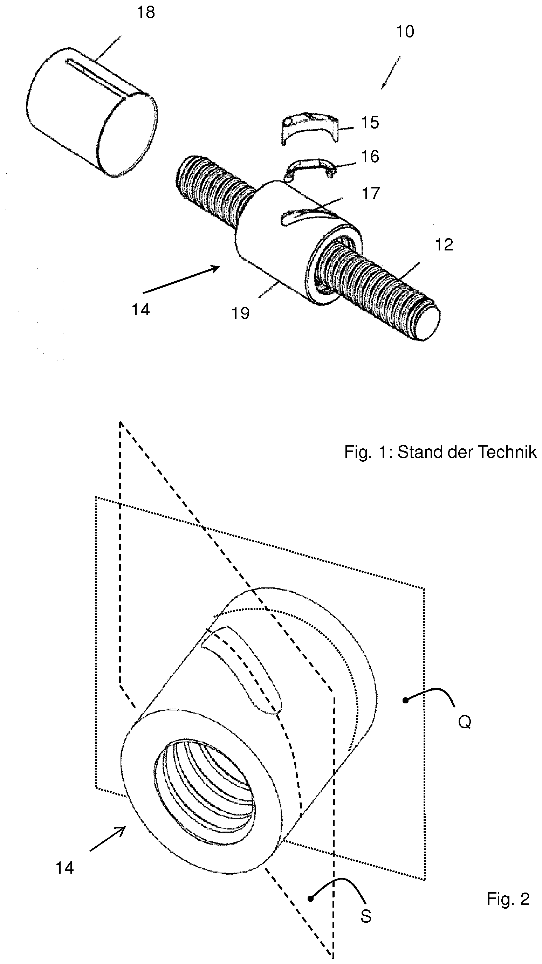

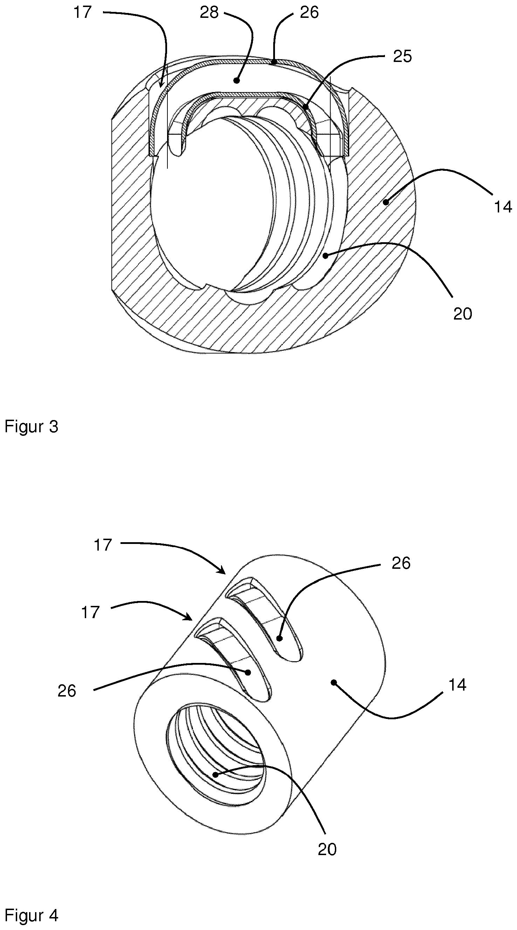

Figur 1 zeigt ein KGT 10 nach Stand der Technik und wurde oben bereits erläutert. Figur 2 dient dazu, die Schnittebenen der Figuren 3-9 besser zu verstehen. Die Lage einer Querschnittsebene sowie einer Schrägschnittebene sind eingezeichnet. Die Schrägschnittebene S ist so ausgelegt, dass sie einen Kugelumlenkkanal, verlaufend in einer Öffnung 17, der Länge nach schneidet.

Figur 3 zeigt eine Ausführung eines erfinderischen KGT mit einer Spindelmutter 14 im Schrägschnitt S, welcher auch die Kugelumlaufrillen 20 zeigt. In der Öffnung 17 ist eine Kugelumlenkung ohne Hülse 18 montiert, sie bildet den Kugelumlenkkanal 28. Die Unterschale 25 ist eine halbschalige Ausführung als relativ flaches Bauteil. Die Oberschale 26 ist in ebenfalls als flaches Blechformteil gezeigt. Die Längsenden stützen auf in der Öffnung eingearbeiteten Vorsprüngen ab.

Figur 4 zeigt diese Variante in einer Aufsicht von aussen oben. Die Oberschale(n) 26 decken die Öffnung(en) 17 ab. Erfindungsgemäss sind keine weiteren Sicherungsbügel, Verschraubungen oder Sicherungshülsen notwendig.

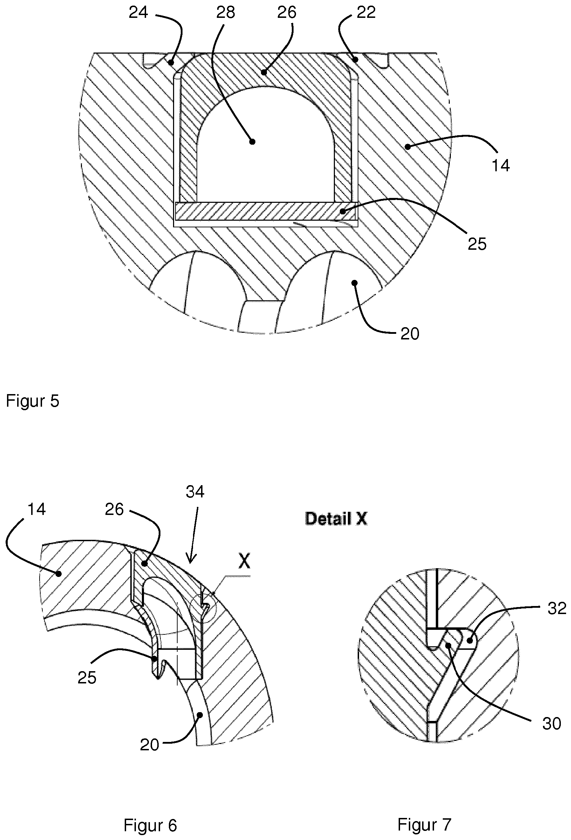

Figur 5 zeigt die Befestigungsart "Verstemmen" im Querschnitt. Eine relativ flach ausgeführte Unterschale 15 und eine Oberschale 26 mit einem Tunnelprofil für den Kugelumlenkkanal 28 sind in der Öffnung 17 in der Spindelmutter 14 angeordnet. Der Verstemmvorgang hat am Rand der Öffnung zwei Vorsprünge, Nasen bzw. Stege 22, 24 ausgebildet, die die Kugelumlenkung an Ort und Stelle sichern.

Die Figuren 6 und 7 zeigen die Befestigungsart mit einem Clip bzw. Federelement 30 in einer Nut 32. Die Montage- bzw. Einschubrichtung ist mit einem Pfeil 34 angedeutet. Die Verriegelung tritt ein, wenn das Federelement 30 in die Nut 32 einrasten kann.

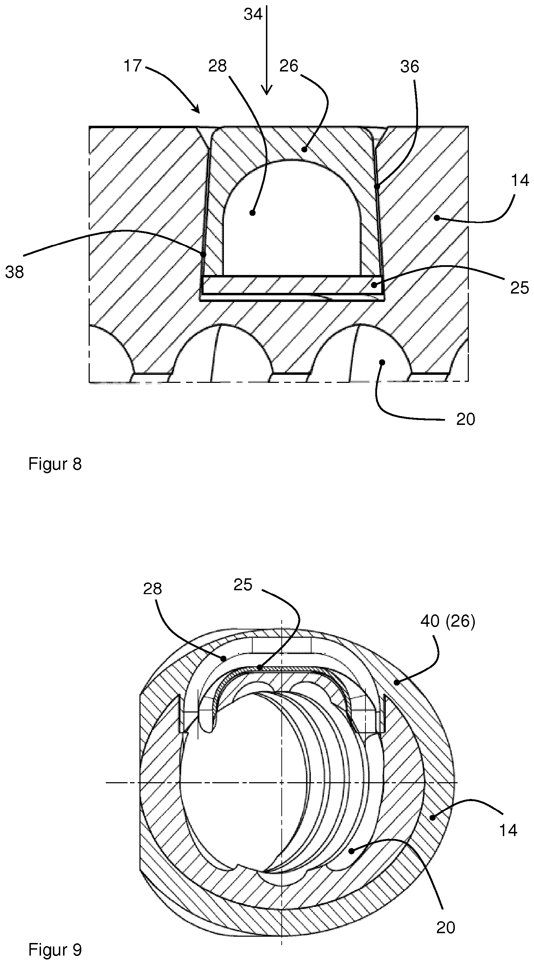

Figur 8 illustriert die Befestigungsart einer Kombination aus Unterschale 25 und Oberschale 26 in einer Öffnung 17 mit nach oben (radial nach aussen) konisch zulaufenden Seitenwänden 36, 38. Der erzielte Klemmsitz der Oberschale 26 ist deutlich zu erkennen.

Figur 9 zeigt eine mit Kunststoff umspritzte Kugelmutter 14, die damit eine erweiterte Oberschale 40 erhält. Die Unterschale 25 ist verbaut wie oben geschildert, während die obere Hälfte des Kugelumlaufkanals 28 einstückig durch den Spritzvorgang entstanden ist, bei dem ein eingelegtes Halbzeug bzw. Einlegeteil die Oberschale vorgegeben hat.

### BEZUGSZEICHENLISTE

- 10: Kugelgewindetrieb
- 12: Gewindespindel
- 14: Spindelmutter
- 15: Kugelumlenkung, zweiter Teil
- 16: Kugelumlenkung, erster Teil
- 17: Öffnung
- 18: Hülse
- 19: Mutternkörper
- 20: Kugelumlaufrille der Spindelmutter
- 22, 24: Nase, Steg
- 25: Unterschale
- 26: Oberschale
- 28: Kugelumlenkkanal
- 30: Federelement
- 32: Nut, Rille, Hinterschneidung
- 34: Montagerichtung
- 36, 38: Seitenwand (der Öffnung 17 in der Spindelmutter 14
- 40: erweiterte Oberschale

## Patentansprüche

1. Kugelgewindetrieb, umfassend
• eine Gewindespindel (12) und
• eine Spindelmutter (14), die die Gewindespindel (12) koaxial zumindest teilweise umschliesst und
• einer Vielzahl von Kugeln, die im Zwischenraum zwischen Gewindespindel (12) und Spindelmutter (14) umlaufen können; und
• einer in einer Öffnung (17) in der Mantelfläche der Spindelmutter (14) angeordneten Kugelumlenkung, die zumindest zweiteilig ausgeführt ist und eine Oberschale (26) und eine Unterschale (25) umfasst, wobei die Unterschale (26) radial innen näher zur Spindelmutterlängsachse angeordnet ist als die Oberschale (25) und
• die Unterschale eine im Wesentlichen halbschalige Kontur aufweist, **dadurch gekennzeichnet, daß**
• die Oberschale (26) und Unterschale (25) ohne weitere, diskrete mechanische Befestigungsmittel in der Spindelmutter (14) befestigt werden;
• die Verbindung von Oberschale (26) und Spindelmutter (14) aber durch eine Verriegelung erfolgt, aufbauend auf einem Federelement (30) an der Oberschale (26), das im montierten Zustand in eine Nut (32) in der Seitenwand der Öffnung (17) in der Spindelmutter (14) eingreift und die Oberschale (26) in einer definierten Position in der Öffnung (17) sichert.

2. Kugelgewindetrieb nach Anspruch 1, **dadurch gekennzeichnet, dass** die in der Spindelmutter (14) montierte Anordnung aus Unterschale (26) und Oberschale (25) nicht über die durch die Spindelmutter vorgegebene Aussenkontur hinausragt.

3. Kugelgewindetrieb nach Anspruch 1- 2, **dadurch gekennzeichnet, dass** die Unterschale (25) als Formteil, als Tiefziehteil, Stanz- oder Präge- oder Spritzgussteil aus Metall oder Kunststoff ausgeführt ist.

4. Kugelgewindetrieb nach Anspruch 1-3, **dadurch gekennzeichnet, dass** die Verbindung von Unterschale (25) und Spindelmutter (14) eine Klemmung ist.

5. Kugelgewindetrieb nach Anspruch 1-4, **dadurch gekennzeichnet, dass** die Oberschale (26) als Formteil, als Tiefziehteil, Stanz- oder Präge- oder Spritzgussteil aus Metall oder Kunststoff ausgeführt ist.

6. Kugelgewindetrieb nach Anspruch 1-4, **dadurch gekennzeichnet, dass** im montierten Zustand der Kugelumlenkkanal (28) zumindest abschnittsweise durch die Oberschale (26), die Unterschale (25) und die Seitenwände der Öffnung (17) gebildet wird.

## Claims

1. Ball screw drive, comprising
• a threaded spindle (12), and
• a spindle nut (14) which at least partially surrounds the threaded spindle (12) coaxially; and
• a plurality of balls which can rotate in the intermediate space between the threaded spindle (12) and the spindle nut (14); and
• a ball deflector arranged in an opening (17) in the lateral surface of the spindle nut (14), which ball deflector is designed at least in two parts and comprises an upper shell (26) and a lower shell (25), wherein the lower shell (25) is arranged radially inwardly closer to the longitudinal axis of the spindle nut than the upper shell (26), and
• the lower shell has a substantially half-shell contour,
**characterized in that**
• the upper shell (26) and lower shell (25) are fastened in the spindle nut (14) without further, discrete mechanical fastening means;
• but the connection of the upper shell (26) and the spindle nut (14) is made by a locking mechanism, based on a spring element (30) on the upper shell (26), which in the assembled state engages in a groove (32) in the side wall of the opening (17) in the spindle nut (14) and secures the upper shell (26) in a defined position in the opening (17).

2. Ball screw drive according to claim 1, **characterized in that** the assembly of lower shell (25) and upper shell (26) mounted in the spindle nut (14) does not project beyond the outer contour defined by the spindle nut.

3. Ball screw according to claim 1-2, **characterized in that** the lower shell (25) is designed as a molded part, a deep-drawn part, a stamped or embossed or injection-molded part made of metal or plastic.

4. Ball screw drive according to claim 1-3, **characterized in that** the connection of lower shell (25) and spindle nut (14) is a clamping.

5. Ball screw according to claim 1-4, **characterized in that** the upper shell (26) is designed as a molded part, a deep-drawn part, a stamped or embossed or injection-molded part made of metal or plastic.

6. Ball screw according to claim 1-4, **characterized in that** in the assembled state the ball deflection channel (28) is formed at least in sections by the upper shell (26), the lower shell (25) and the side walls of the opening (17).

## Revendications

1. Vis d'entraînement à billes, comprenant
• une broche filetée (12) et
• un écrou de broche (14) qui entoure au moins partiellement la broche filetée (12) de façon coaxiale et
• plusieurs billes qui peuvent tourner dans l'espace formé entre la broche filetée (12) et l'écrou fileté (14) et
• un renvoi de billes disposé dans une ouverture (17) dans la surface d'enveloppe de l'écrou fileté (14), qui est réalisé au moins en deux parties et qui comprend une coque supérieure (26) et une coque inférieure (25), la coque inférieure (25) étant disposée plus près vers l'intérieur de l'axe longitudinal de l'écrou fileté dans le sens radial que la coque supérieure (26) et
• la coque inférieure présentant un contour sensiblement en forme de demi-coque,
**caractérisée en ce que**
• la coque supérieure (26) et la coque inférieure (25) sont fixées dans l'écrou fileté (14) sans autres moyens de fixation mécaniques discrets
• mais l'assemblage entre la coque supérieure (26) et l'écrou fileté (14) est effectué par un verrouillage composé d'un élément de ressort (30) sur la coque supérieure (26), qui se met en prise, dans l'état monté, dans une rainure (32) dans la paroi latérale de l'ouverture (17) de l'écrou fileté (14) et maintient la coque supérieure (26) dans une position définie dans l'ouverture (17).

2. Vis d'entraînement à billes selon la revendication 1, **caractérisée en ce que** la disposition de coque inférieure (25) et coque supérieure (26) montée dans l'écrou fileté (14) ne dépasse pas au-delà du contour extérieur défini par l'écrou fileté.

3. Vis d'entraînement à billes selon les revendications 1 à 2, **caractérisée en ce que** la coque inférieure (25) est réalisée comme une pièce moulée, une pièce formée par emboutissage profond, une pièce découpée à l'emporte-pièce, estampée ou moulée par injection en métal ou en matière plastique.

4. Vis d'entraînement à billes selon les revendications 1 à 3, **caractérisée en ce que** l'assemblage entre la coque inférieure (25) et l'écrou fileté (14) est un serrage.

5. Vis d'entraînement à billes selon les revendications 1 à 4, **caractérisée en ce que** la coque supérieure (26) est réalisée comme une pièce moulée, une pièce formée par emboutissage profond, une pièce découpée à l'emporte-pièce, estampée ou moulée par injection en métal ou en matière plastique.

6. Vis d'entraînement à billes selon les revendications 1 à 4, **caractérisée en ce que,** dans l'état monté, le conduit de renvoi des billes (28) est formé au moins en partie par la coque supérieure (26), la coque inférieure (25) et les parois latérales de l'ouverture (17).
